# EUROPEAN PATENT SPECIFICATION

(11) **EP 0 298 565 B1**
(45) Date of publication and mention of the grant of the patent: **15.09.1993**
(21) Application number: 88201410.3
(22) Date of filing: 06.07.1988
(51) Int. Cl.: A01B 29/04, A01B 29/06

(54) **A soil cultivating machine**
Bodenbearbeitungsmaschine
Machine pour travailler le sol

(30) Priority: 08.07.1987 NL 8701605
(43) Date of publication of application: 11.01.1989
(73) Proprietor: C. van der Lely N.V., NL-3155 PD Maasland (NL)
(72) Inventor: Van der Lely, Cornelis, Zug (CH)
(74) Representative: Mulder, Herman

(56) References cited:
- EP-A- 0 150 080
- DE-A- 3 340 686
- DE-A- 3 444 970
- DE-U- 8 519 861
- US-A- 1 727 198
- US-A- 1 982 157
- US-A- 2 353 790
- US-A- 4 200 156

## Description

A soil cultivating machine comprising a frame and a roller rotatably coupled to that frame by means of arms, which machine further includes a carrier beam, coupled to the frame, for carrying at least one scraper element for scraping the roller, said scraper element being connected to a scraper element carrier, which is hingeably coupled to said carrier beam, the scraper element being pressed to the cylindrical portion of the roller by means of a spring loaded element disposed between the carrier beam and the scraper element carrier.

A suchlike machine is known from DE-A-3444970. Although this machine performs relatively well it is to some extent, however, disadvantageous to have the scraper elements pressed to the cylindrical surface of the roller in that the scraper will be liable to wear. It is the object of the invention to overcome or at least reduce the effect of this problem. According to the invention this can be achieved by providing the scraper element carrier with a spacer contacting the cylindrical portion of the roller, with the aid of which spacer at least a reduction in pressure exerted by the scraper element on the cylindrical portion of the roller is obtained, in which the spacer is mounted between the cylindrical portion of the roller and the scraper element carrier. Such a construction will provide for a comparatively equal scraping or cleaning quality however, with a longer life of the scraper elements and with a lesser demand for maintenance. According to the invention a favourable construction is obtained when the spacer is formed of elastic material.

It should be noted that the machine, known from the patent application EP-A-0165887, shows a follower element cooperating with a scraper element. However, in this construction the scraper element is kept from the roller surface by gravitation while the follower element is mounted to a separate carrier-arm, and located at the top/frontside of the roller. Although some elements provided in this construction seem to be alike, the principle of scraping is different and the quality of scraping is less compared to the state of the art construction, as there is left some space between the scraper and the concerning cylindrical portion of the roller. The lesser quality is also caused by the difficulty to maintain the desired fine adjustment of the scraper and the roller in the rough conditions during work.

A still further feature of the invention concerns a soil cultivating machine of the above-defined type wherein a scraper element is accommodated in a holder, capable of sliding in one or more guide means. By means of this provision a scraper element can be exchanged in a simple manner, while it is also possible, if necessary, to adjust the scraper element position so as to have always an optimum scraping action.

For a better understanding of the invention and to show how the same may be carried into effect, reference will now be made, by way of example, to the accompanying drawings, in which:
Figure 1 is a plan view of a soil cultivating machine including a roller according to the invention;
Figure 2 is, to an enlarged scale, a view taken on the line II - II in Figure 1;
Figure 3 is a view taken in the direction of the arrow III in Figure 2;
Figure 4 is a cross-sectional view on the line IV - IV in Figure 2.

The drawings illustrate a soil cultivating machine, in particular a machine for the preparation of a seed bed.

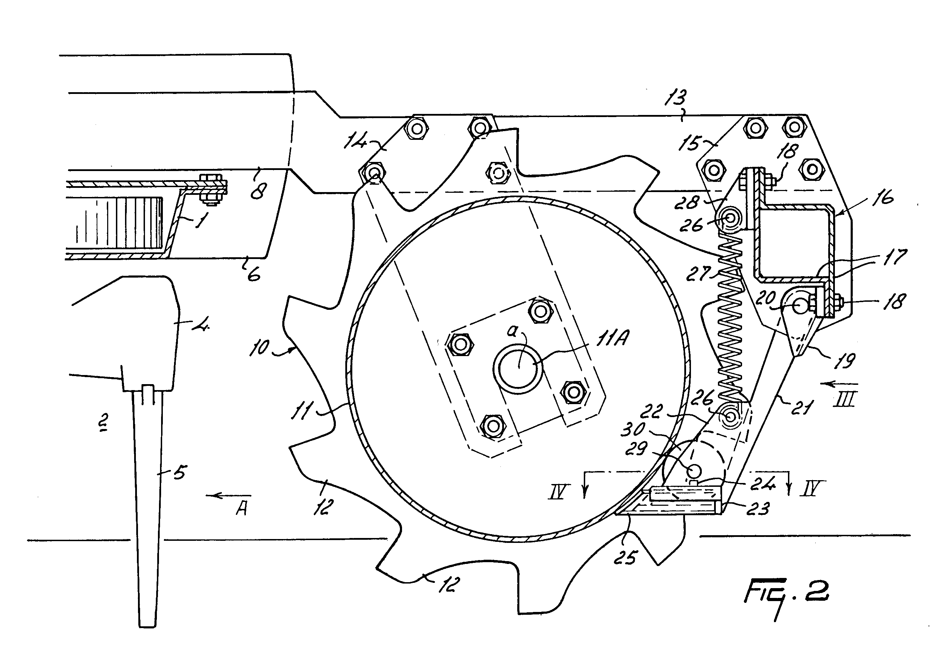

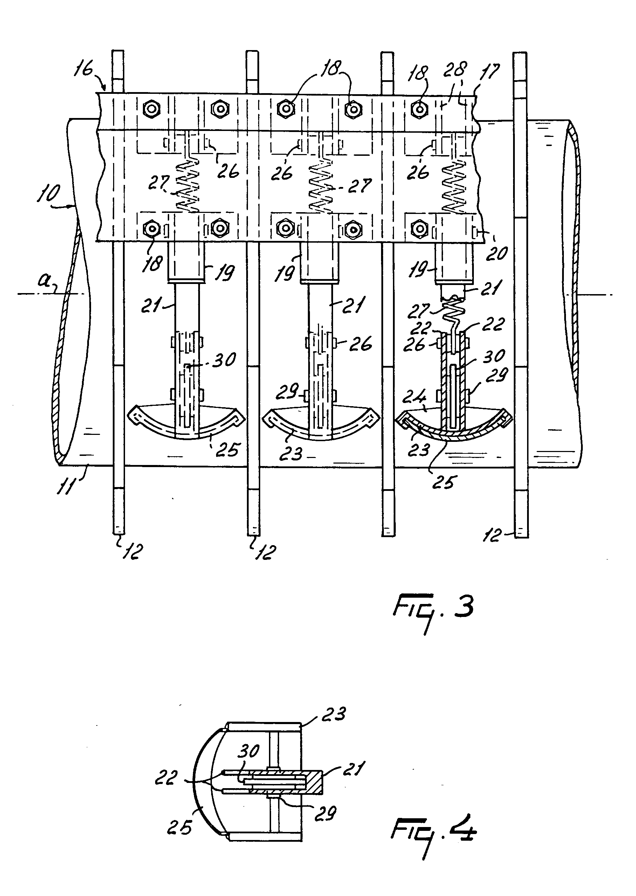

The machine comprises a box-like frame portion 1 which extends transversely to the direction of operative travel A. The frame portion 1 supports a plurality of soil working members 2 which are arranged in side-by-side relationship in a row extending transversely to the direction of operative travel A, and each of which is rotatable about an upwardly directed, preferably vertical, shaft 3, the longitudinal centre lines of the said shafts being interspaced equidistantly by preferably 25 cms. Each of the soil working members 2 is provided with an at least substantially horizontal carrier 4, which is mounted on the shaft 3 extending from the bottom side of the frame portion 1 and at its ends is provided with downwardly extending soil working elements 5. The ends of the frame portion 1 are closed by means of plates 6 which extend upwardly and are located at least substantially parallel to the direction of operative travel A. The leading side of each of the plates 6 is provided with a pin 7 which extends transversely to the direction of operative travel A, the arrangement being such that the longitudinal centre lines thereof are in alignment. About the respective pins 7 there are arranged pivotably arms 8 which extend rearwardly along the plates 6. By means of an adjusting device 9 arranged near the rear sides of the plates 6 and preferably comprising a threaded spindle, the arms 8 can be adjusted in height. Between the ends of the arms 8 there is arranged freely rotatably a roller 10. The roller 10 includes a cylindrical carrier or portion 11 which is provided in a known per se manner near its ends and therebetween with crowns of cams 12. Through a portion 13, each of the arms 8 extends to beyond an obliquely downwardly and rearwardly extending support 14, in which are supported freely rotatably the ends of the cylindrical carrier 11 by means of a shaft 11A. At its end, each of the portions 13 is provided with a plate-shaped support 15, which extends at least substantially parallel to the support 14 (Figure 2). Between the supports 15 there is arranged a carrier beam 16 which extends at least substantially parallel to the rotational axis a of the roller 10 and transversely to the direction of operative travel A. The carrier beam 16 consists of two angle pieces 17 made of plate material, one leg of each of which is folded at a square angle. The square-angled portion of one angle piece 17 is clamped by means of bolts 18 against the straight leg of the other angle piece, so that a box-like beam of square cross-section is formed (Figure 2). As is apparent from Figure 3, each time two pairs of interspaced bolts 18 are located, taken in the direction of operative travel A, above each other between two crowns of cams 12. By means of the lower pairs of bolts 18, a bracket-shaped support 19 is fastened to the carrier beam 16. By means of a pin 20 extending transversely to the direction of operative travel A and being located at least substantially parallel to the rotational axis a of the roller 10, an obliquely downwardly and forwardly directed, straight carrier 21 is arranged pivotably between the legs of the bracket-shaped support 19. The pin 20 is located at least substantially below the midway point of the beam 16 and at a height above the bottom side of the cylindrical carrier 11 which is approximately two thirds of the diameter thereof, the said diameter preferably being approximately 30 cms. Seen in plan view, the pin 20 is located just behind the path described by the tips of the cams 12, so that a compact arrangement is obtained. The portion of the support 19 that is located between the legs and at the rear side serves as a stop for the carrier 21 (Figure 2), so that a pivotal movement to the rear is prevented. Seen in side view, the carrier 21 tapers downwardly and is arranged such that its longitudinal centre line extends in an at least substantially tangential direction relative to the periphery of the cylindrical carrier 11. At its leading side, the carrier 21 is provided with two interspaced supporting members 22, the width of which increases in the downward direction (Figure 2), and which supporting members 22 extend from the midway point to the lower end of the carrier 21. The lower end of the carrier 21 is furthermore provided with a holder 23 which at its upper side is of a hollow cross-section (Figure 3) and extends substantially through the entire width of the lower end of the supporting members 22. The hollow cross-section of the holder 23 is shaped in accordance with a curvature of the arc of a circle having a centre line that corresponds at least substantially to the distance between two adjacent crowns of cams 12 (Figure 3), the said distance preferably being 8 to 10 cms. Between the midway point of the supporting members 22 and the longitudinal sides extending in the direction of operative travel A of the holder 23 there are arranged stiffening ribs 24. At its longitudinal sides extending in the direction of operative travel A, each holder 23 is provided with a downwardly turned-over edge (Figure 3), the arrangement being such that thereby is formed a guide means for accommodating the longitudinal sides of the scraper element 25, which scraper element 25 is identical in shape to the holder 23 and bears against the rear side thereof serving as a stop (Figures 2 and 3). The leading end of the preferably approximately 2 mms thick scraper element 25 is pointed, while the identically bevelled portions from the said point to the longitudinal sides extend according to the curvature of the periphery of the cylindrical carrier 11 (Figure 4) and bear thereagainst. The width of the scraper element 25 is substantially equal to the distance between adjacent crowns of cams, which distance, as was stated in the foregoing, preferably is 8 to 10 cms (Figure 3). At the upper side between the supporting members 22 there is attached by means of a pin 26 the lower end of a tensile spring 27, which pin 26 extends transversely to the direction of operative travel A and is in an at least substantially horizontal position. The other end of the tensile spring 27 is attached by means of a pin 26 between the interspaced lugs of a support 28, which is secured by means of an upper pair of bolts 18 for the connection of the angle pieces 17 of the carrier beam 16. At some distance straight above the stiffening ribs 24 there is provided between the supporting members 22 a pin 29 which extends transversely to the direction of operative travel A and at least substantially parallel to the rotational axis a of the roller 10. Around the pin 29 there is provided freely rotatably a spacer 30 constituted by a roller having a width of preferably 2 mms. By the action of the tensile spring 27, the spacer 30 and the leading end of the scraper element 25 bear against the periphery of the cylindrical carrier 11, the arrangement being such that the scraping side of the scraper element 25 can assume its optimum position without this element bearing against the cylinder periphery under such a pressure that excessive wear will occur. The spacer 30 is a means to obtain a pressure reduction for the scraper element. As is apparent from Figure 3, the roller constituting the spacer 30 extends by means of its lower end to substantially halfway the hollow upper side of the holder 23. The diameter of the roller 30, which may also be a somewhat elastic one, is approximately equal to the radius of curvature of the hollow profile of the holder (Figure 3) and is preferably approximately 10 cms. The scraper element can be replaced easily by pushing same from or into the guide means formed by the turned-over edges of the holder 23. Optionally, there may be provided an adjusting device for the scraper element 25 with the object of obviating wear. In the embodiments disclosed, the scraper elements 25 may be made of a resilient material. Seen in side view (Figure 2), the scraper elements are in a substantially horizontal position and bear against the periphery of the cylindrical carrier 11 in a point located at a circumferential angle of approximately 60° below the horizontal plane through the rotational axis a.

Inside the box-like frame portion 1, each shaft 3 of a soil working member 2 is provided with a pinion 51, the arrangement being such that the pinions on the shafts of adjacent soil working members are in driving connection with each other. Near the centre of the frame portion 1, the shaft 3 of a soil working member 2 is extended, which extension reaches to into the gear box 52 positioned on the upper side of the box-like frame portion 1. Inside the gear box 52, the extension is connected via a bevel gear transmission and a speed variator 53 located at the rear side of the gear box to a shaft 54 which extends in the direction of operative travel A and projects from the gear box at the front side. The end of the shaft 54 projecting from the gear box 52 can be coupled to the power take-off shaft of a tractor via an intermediate shaft 55. Near its centre, the frame portion 1 is fitted at its leading side with a trestle 56 including a three-point connection for coupling to the three-point lifting hitch of a tractor.

The machine as described in the foregoing operates as follows.

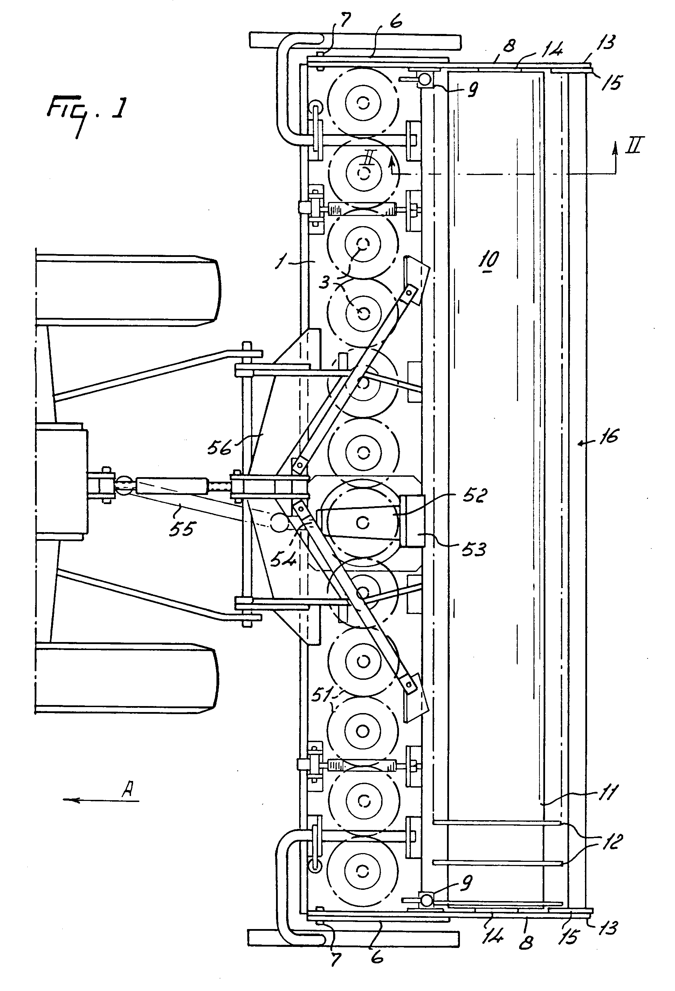

During operation, the machine is connected to the three-point lifting hitch of the tractor by means of the trestle 56 and, during movement in a direction indicated by the arrow A, the soil working members 2 can be driven such from the power take-off shaft of the tractor via the intermediate shaft 55 and the above-described transmission that adjacent soil working members 2 rotate in opposite directions (Figure 1), whereby their soil working elements 5 cultivate at least contiguous strips of soil. By means of the roller 10, it is possible to adjust the working depth of the soil working members 2 by adjusting the respective arms 8 with the aid of the adjusting device 9. During operation, the machine bears on the soil by means of the roller 10, while the cams 12 penetrate into the soil and cause the roller to rotate (Figure 2). In order to prevent soil from sticking between the crowns of cams 12, the above-described, specially designed and arranged scraper elements 25 are provided.

Each of the scraper elements 25 bears by means of its leading side from the point from where it is shaped in accordance with the curvature of the periphery of the cylindrical carrier 11 against the said periphery under the action of the tensile spring 27 located in front of the carrier 21, while the directly superjacent spacer 30 constituted by a roller ensures that, in spite of any deviations in the cylindrical shape of the periphery of the carrier 11, the position of the scraper element is accurately maintained, thereby preventing excessive wear. Due to the hollow design of the scraper element, its bottom side being spherical, there is obtained an effective scraping action, while the resistance against deformation is increased significantly by the presence of the guide means in the holder 23.

When the periphery of the cylindrical carrier 11 is provided with a wear-resistant, smooth coating, e.g. of chromium or a synthetic resin material, it is also possible to effectively prevent excessive wear. The support for the carriers of the scraper elements 25 by means of the carrier beam 16, which is constituted by two plate-material angle pieces, may be cheap and light, while the respective carriers for the scraper elements can easily be replaced.

## Claims

1. A soil cultivating machine comprising a frame and a roller (10) rotatably coupled to that frame by means of arms (13), which machine further includes a carrier beam (16), coupled to the frame, for carrying at least one scraper element (25) for scraping the roller (10), said scraper element (25) being connected to a scraper element carrier (21), which is hingeably coupled to said carrier beam (16), the scraper element (25) being pressed to the cylindrical portion (11) of the roller by means of a spring loaded element (27) disposed between the carrier beam (16) and the scraper element carrier (21), characterized in that the scraper element carrier (21) is provided with a spacer (30) contacting the cylindrical portion of the roller, with the aid of which spacer (30) at least a reduction in pressure exerted by the scraper element (25) on the cylindrical portion (11) of the roller (10) is obtained, in which the spacer (30) is mounted between the cylindrical portion (11) of the roller (10) and the scraper element carrier (21).

2. A soil cultivating machine as claimed in claim 1, characterized in that the scraper element (25) is mounted capable of sliding in a holder (23), made of a single sheet, the folded edges of which form the guide means for the sliding of the scraper (25).

3. A soil cultivating machine as claimed in claim 1 or 2, characterized in that a carrier (21) is provided at its lower end with a holder (23) for the scraper element (25), which holder (23) has a downwardly directed curved profile seen in a view transverse to the axis of the roller and longitudinal sides extending in the direction of operative travel (A), which holder includes a guide means for a scraper element (25) of a matching shape.

4. A soil cultivating machine as claimed in claim 2 or 3, characterized in that the lower side of the spacer (30) reaches to the upwardly facing side of the holder (23).

5. A soil cultivating machine as claimed in claim 3, characterized in that the spacer (30) is a roller with a diameter, which is at least substantially equal to the radius of curvature of the hollow upper end of the holder.

6. A soil cultivating machine as claimed in any one of the preceding claims, characterized in that between a part of a carrier (11), located between each leading end of that carrier (21), and a point located thereabove and part of the carrier beam (16), there is arranged a tensile spring (17).

7. A soil cultivating machine as claimed in any one of the preceding claims, characterized in that the scraper elements (25) extend in a substantially horizontal direction.

## Patentansprüche

1. Bodenbearbeitungsmaschine mit einem Gestell und einer Walze (10), die an diesem Gestell mittels Armen (13) drehbar angeordnet ist, sowie mit einem mit dem Gestell verbundenen Tragbalken (16) zum Abstützen mindestens eines Abstreifers (25) zum Abstreifen der Walze (10), der an einem Abstreifer-Träger (21) angeordnet ist, der mit dem Tragbalken (16) gelenkig verbunden ist, wobei der Abstreifer mittels eines federbelasteten Elementes (27), das zwischen dem Tragbalken (16) und dem Abstreifer-Träger (21) angeordnet ist, an den zylindrischen Teil (11) der Walze angedrückt wird,
dadurch gekennzeichnet, daß der Abstreifer-Träger (21) mit einem Distanzhalter (30) versehen ist, der den zylindrischen Teil der Walze berührt, und durch den zumindest eine Reduzierung des Druckes zu erzielen ist, der von dem Abstreifer (25) auf den zylindrischen Teil (11) der Walze (10) ausgeübt wird, wobei der Distanzhalter (30) zwischen dem Zylindrischen Teil (11) der Walze (10) und dem Abstreifer-Träger (21) angeordnet ist.

2. Bodenbearbeitungsmaschine nach Anspruch 1,
dadurch gekennzeichnet, daß der Abstreifer (25) verschiebbar in einem Halter (23) angeordnet ist, der aus einem Einzelblech angefertigt ist, und dessen Faltkanten die Führung zum Verschieben des Abstreifers (25) bilden.

3. Bodenbearbeitungsmaschine nach Anspruch 1 oder 2,
dadurch gekennzeichnet, daß ein Träger (21) an seinem unteren Ende mit einem Halter (23) für den Abstreifer (25) versehen ist, und daß der Halter (23) ein quer zur Walzenachse gesehen nach unten gekrümmtes Profil und sich in Arbeitsrichtung (A) erstreckende Längsseiten aufweist und mit einer angepaßten Führung für einen Abstreifer (25) versehen ist.

4. Bodenbearbeitungsmaschine nach Anspruch 2 oder 3,
dadurch gekennzeichnet, daß sich die Unterseite des Distanzhalters (30) bis zu der nach oben gerichteten Seite des Halters (23) erstreckt.

5. Bodenbearbeitungsmaschine nach Anspruch 3,
dadurch gekennzeichnet, daß der Distanzhalter (30) eine Rolle ist, deren Durchmesser zumindest im wesentlichen gleich dem Krümmungsradius des hohlen oberen Endes des Halters ist.

6. Bodenbearbeitungsmaschine nach einem der vorhergehenden Ansprüche,
dadurch gekennzeichnet, daß zwischen einem Teil eines Trägers (21), der sich zwischen zwei vorderen Enden dieses Trägers (21) befindet, und einem darüberliegenden Punkt des Tragbalkens (16) eine Zugfeder (17) angeordnet ist.

7. Bodenbearbeitungsmaschine nach einem der vorhergehenden Ansprüche,
dadurch gekennzeichnet, daß die Abstreifer (25) im wesentlichen horizontal ausgerichtet sind.

## Revendications

1. Machine pour cultiver le sol comprenant un châssis et un rouleau (10) relié de manière rotative à ce châssis au moyen de bras (13), laquelle machine comprend en outre une poutre porteuse (16) couplée au châssis pour porter au moins un élément râcleur (25) pour râcler le rouleau (10), ledit élément râcleur (25) étant relié à un support (21) d'élément râcleur qui est couplé de manière pivotante à ladite poutre porteuse (16), l'élément râcleur (25) étant pressé vers la partie cylindrique (11) du rouleau au moyen d'un élément (27) sollicité par un ressort et disposé entre la poutre porteuse (16) et le support (21) de l'élément râcleur, caractérisée en ce que le support (21) d'élément râcleur est muni d'un organe d'espacement (30) en contact avec la partie cylindrique du rouleau, à l'aide duquel organe d'espacement (30) est obtenue au moins une réduction de la pression exercée par l'élément râcleur (25) sur la partie cylindrique (11) du rouleau (10), l'organe d'espacement (30) étant monté entre la partie cylindrique (11) du rouleau et le support (21) de l'élément râcleur.

2. Machine pour cultiver le sol selon la revendication 1, caractérisée en ce que l'élément râcleur (25) est monté coulissant dans une monture (23) faite d'une seule feuille dont les bords repliés forment les moyens de guidage pour le coulissement du râcleur (25).

3. Machine pour cultiver le sol selon la revendication 1 ou 2, caractérisée en ce qu'un support (21) est muni sur son extrémité inférieure d'une monture (23) pour l'élément râcleur (25), laquelle monture a un profil courbe dirigé vers le bas en étant vu transversalement à l'axe du rouleau et des côtés longitudinaux s'étendant dans le sens de marche (A) du travail, cette monture comportant un moyen de guidage pour un élément râcleur (25) de forme complémentaire.

4. Machine pour cultiver le sol selon la revendication 2 ou 3, caractérisée en ce que le côté inférieur de l'organe d'espacement (30) s'étend jusqu'au côté de la monture (23) faisant face vers le haut.

5. Machine pour cultiver le sol selon la revendication 3, caractérisée en ce que l'organe d'espacement (30) est un rouleau dont le diamètre est au moins sensiblement égal au rayon de courbure de l'extrémité supérieure creuse de la monture.

6. Machine pour cultiver le sol selon l'une quelconque des revendications précédentes, caractérisée en ce qu'un ressort de traction (27) est disposé entre une partie d'un support (21) située entre chaque extrémité antérieure de ce support (21) et un point situé au dessus de celle-ci et faisant partie de la poutre porteuse (16).

7. Machine pour cultiver le sol selon l'une quelconque des revendications précédentes, caractérisée en ce que les éléments râcleurs (25) s'étendent dans une direction sensiblement horizontale.
